# EUROPEAN PATENT APPLICATION

(11) **EP 1 248 479 A2**
(43) Date of publication of application: **09.10.2002**
(21) Application number: 02005792.3
(22) Date of filing: 14.03.2002
(51) Int. Cl.: H04Q 7/36

(54) **Method to offer packet services on radio resources shared by more users in a mobile system of the TDD-CDMA type**

(30) Priority: 04.04.2001 IT MI010721
(71) Applicant: Siemens Information and Communication Networks S.p.A., 20126 Milano (IT)
(72) Inventor: Cangemi, Caterina, 20092 Cinisello Balsamo (IT); De Benedittis, Rossella, 20137 Milano (IT)
(74) Representative: Giustini, Delio

(57) **Abstract**

According to the invention, an identifier, here described as *User - State Flag* (U-SF), is assigned to a pool of radio resources assigned to a mobile station, and possibly shared with other mobile stations, thus enabling the network to address to that specific *(uplink* or *downlink)* resource pool of that specific mobile station.

Always according to the invention, all the time slots of the radio frame are assigned a state index, here described as *Time Slot - State Flag* (TS-SF), enabling the network to indicate the use condition of the relevant time slot to a specific mobile station, for instance addressed through the above-mentioned U-SF field. If the addressed mobile station has resources assigned on time slot "X" and the network enables the use of such time slot, the above-mentioned mobile station could respectively transmit, in the agreed time slot, on the whole resource pool marked with the U-SF state flag that are located on time slot "x" if said time slot has *uplink* direction, or is sure not to receive, for the agreed time slot, from the whole resource pool marked with the U-SF state flag that are located on time slot "x" if said time slot has *downlink* direction.

Finally, as an integration of the points indicated above, the network can signal, for each time slot enabling in transmission, the power level expected in uplink direction by the addressed mobile station.

## Description

### Field of the Invention

The following invention finds application in the field of third Generation (3G) cellular systems, and in particular in 3G cellular networks having TDD TDMA-CDMA radio access technique, defining the modes according to which the network can dynamically control the access of a plurality of mobile stations *(Mobile Station,* MS) to a pool of shared radio resources, optimising the collisions and power consumptions in the above-mentioned mobile stations.

### Background art and description of the technical problem

Packet services are included in the context of the emerging services offered by second-generation cellular network, such as for instance the GSM network *(Global System for Mobile communications*).

These services can offer the mobile user/mobile station, *Mobile Station* (MS), high speed data services without saturating the network, thanks to the use shared among more users of the same radio and line resources.

As already known, the resource sharing principle enables to assign more mobile users to the same resources regulating its access in order that only one of them is authorized to transmit or receive at a given instant.

This kind of access to the network enables on one side to offer a data transfer speed function of the number of mobile users sharing the same resources, and on the other side, the network can enable a number of data sessions with a same number of mobile users higher than the actual number of resources available to the network for the offered service.

The GSM network sort outs the mobile station access to radio resources through the two following modes (reference GSM 04.60 [1]; 03.64 [2]; 03.60 [3]):
- Dynamic Allocation medium access mode;
- Fixed Allocation medium access mode.

In addition to the two modes listed above, there is a third one, called "Extended Dynamic Allocation medium access mode", which, to the purposes of this processing, does not introduce additional elements compared to the mentioned Dynamic Allocation medium access mode.

The dynamic access mode (Dynamic Allocation medium access mode) foresees that the network selects from time to time the addressee mobile station of a data (or signalling) packet in the next time period and through a specific radio resource, and which mobile station could transmit a data (or signalling) packet in the next time period and from a specific radio resource.

The designation of the current packet addressee mobile station occurs through the *Temporary Flow Identifier* (TFI) field present in the data/control block transmitted by the network; while the designation of the mobile station authorised to transmit the next block takes place through the *Uplink State Flag* (USF) field present in the data/control block transmitted by the network.

TFI and USF fields enable to unambiguously identify the addressee mobile station.

The fixed access mode (Fixed Allocation medium access mode) foresees that the network indicates to the mobile station how to use radio resources assigned to it in a definite time period ; the "use mode" is indicated by the network through layer 3 signalling at the beginning of a data session and practically consists in indicating which radio resources and in which time frames the mobile station could transmit and/or receive in an assigned time period.

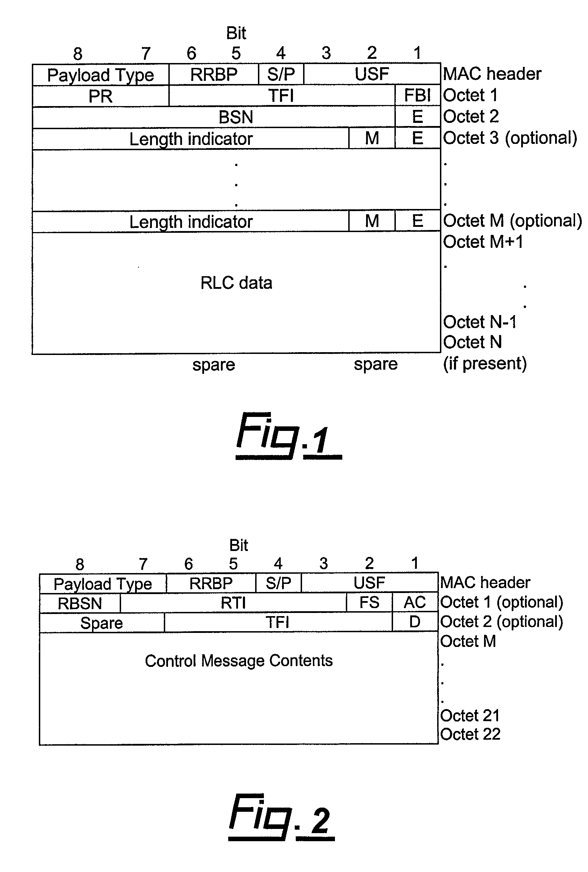

Figure 1 shows the coding of a data block transmitted by the GSM network to the mobile stations containing TFI and USF fields. The mobile station recognising its own TFI, shall be the addressees of the following data ("*RLC data*") field; the mobile station recognising its own USF, shall be the one authorized to transmission in the subsequent block.

Figure 2 shows the coding of a control block transmitted by the GSM network to the mobile stations containing the TFI and USF fields. The mobile station recognising its own TFI, shall be the addressees of the following control message ("*Control message content*"); the mobile station recognising its own USF, shall be that authorized to transmit in the subsequent block.

To the purposes of this description, it is important to notice that in the context of a GSM system there is an unambiguous and implicit matching between radio resources in *downlink* (i.e. the transmission direction occurs from the network to the mobile stations ) and those in *uplink* (i.e. the transmission direction occurs from the mobile station to the network), based on the duplex technique FDD *(Frequency Division Duplex)* according to which the transmission direction is defined by the frequency band; this implies that the mobile station reading its own USF from a block transmitted by the network through the "x" resource, automatically knows the *uplink* resources from which it is enabled to transmit: in particular, it shall be from the same time slot where the "x" resource is placed but at the corresponding frequency for the *uplink* transmission direction. Moreover, concerning the dynamic access mode, a mobile station shall constantly listen to the resources assigned it in *downlink* direction to be always ready to receive the packets that the network would transmit to the same and to receive the consent to transmit in *uplink* direction through the USF field.

### Object and summary of the Invention

Therefore, the present invention tackles the technical problem concerning the access to radio resources and in particular it has the scope to define a dynamic rule to arbitrate shared radio resources in the context of a third generation cellular system having TDD *(Time Division Duplex)* TDMA (*Time Division Multiple Access*) - CDMA (*Code Division Multiple Access*) access technique, with particular attention to the power control and consumption optimisation issued in mobile stations, of great importance in the context of third generation cellular systems.

In the field of the 3GPP standardization consortium (*3*^{*rd*} *Generation Partnership Project),* two CDMA radio access techniques have been defined, respectively known as: TDD UTRA *(Time Division Duplex UMTS Terrestrial Radio Access)* in which transmission directions are distinguished in the time domain, and WCDMA UTRA (*Wide band Code Division Multiple Access UMTS Terrestrial Radio Access);* in which transmission directions are distinguished in the frequency domain.

The TDD UTRA technique foresees in turn two options: a broad band one, known as 3.84 Mchips TDD, and a narrow band one, known as 1.28 Mcps TDD or even as TD-SCDMA (*Time Division - Synchronous Code Division Multiple Access*).

In 3GPP context, different techniques are foreseen for access control to radio resources shared among various radio mobile stations (reference TS 25.3xy). With particular reference to the TDD UTRA radio access technique, the network can employ one of the following techniques:
- Layer 3 signalling: the network assigns to the mobile stations given radio resources for a given time period through RRC (*Radio Resource Control*) signalling. The utilization of layer 3 signalling requires a non-negligible sending and processing time and payload (*payload*). It is important to notice that for these systems the radio resource is characterized not only by the time slot (*time slot*) but also by the code used in the specific time slot; the availability of 15 time slots for the 3.84 Mcps TDD UTRA option (or 7, for the TD-SCDMA option), each one housing up to 16 different codes, makes the payload of the signalling message, which is related to the use of each radio resource, quite heavy. This resources arbitration method could be equalled to the fixed access mode of a GSM system.
- Layer 1 signalling: the network indicates the addressee mobile station of the current packet using, to transmit the specific packet, a particular midamble univocally assigned to the concerned mobile station. This technique, exploiting a layer 1 field always present (i.e. the "midamble" field), does not introduce any additional signalling but in practice requires to assign different resources to different users, because of the fact that also the midamble is one of the physical parameters characterizing the radio resource. Moreover, the mobile station is obliged to decode all the packets in *downlink* to be ready to receive information addressed to it.
- Use of common channels: both the network and the mobile station can use common signalling channels, the FACH (*Forward Access Channel*) and the RACH (*Random Access Channel*), respectively, to send short packets or to assign/request resources (dedicated or shared with other users) to which send the more extended packets. The drawback of this method are essentially: the massive use of common signalling channels, to the detriment of other users such as for instance users attached for circuit switched services, and the consequent signalling overload, with the requested processing times.

Finally, it must be noticed that, none of the access methods described above tends to optimise the procedure for the maintenance of the power level of the signal emitted by the mobile stations after assignment of radio resources. During packet transfer, the mobile station shall therefore carry out the power control on the transmitted signal or based on layer 1 indications sent by the network on a dedicated channel when present, or implementing open loop power control techniques. The use of a dedicated channel makes the power control effective, but turns out to be a waste of resources at the radio interface; on the other hand, the open loop power control does not require dedicated radio resources but results to be less efficient of a closed loop power control.

Therefore, the invention herein described offers a dynamic allocation method to assign radio resources in a third generation cellular network exploiting a TDD duplex technique as described in claim 1 below. In particular, according to the invention there is not an implicit association between radio resources in *uplink* and radio resources in *downlink* as it happens for FDD techniques, so that it enables to overcome the present restrictions of the methods described above.

### Brief description of figures

The present invention, together with further characteristics and advantages thereof considered to be novel, form the scope of the appended claim. The invention may be better understood with reference to the following detailed description, taken in conjunction with the accompanying drawings, in which:
- Figure 1 already described, shows the structure of a downlink data block, transmitted by the GSM network to mobile stations connected in packet mode;
- Figure 2 already described, shows the structure of a downlink control block transmitted by a GSM network to mobile stations connected in packet mode;
- Figure 3 shows the radio frame structure of the third generation cellular system exploiting TD-SCDMA option;
- Figure 4 shows the structure of a downlink data block, transmitted on radio frames of fig.3 by the network, exploiting TD-SCDMA option, to mobile stations connected in packet mode, which differs from a standard GSM data block (fig.1) due to the presence of information fields specific of the present invention;
- Figure 5 shows the structure of a downlink control block transmitted on radio frames of fig.3 by the network, exploiting TD-SCDMA option, to mobile stations connected in packet mode, differing from a standard GSM control block (fig.2) due to the presence of information fields specific of the present invention.

### Description of a preferred embodiment of the Invention

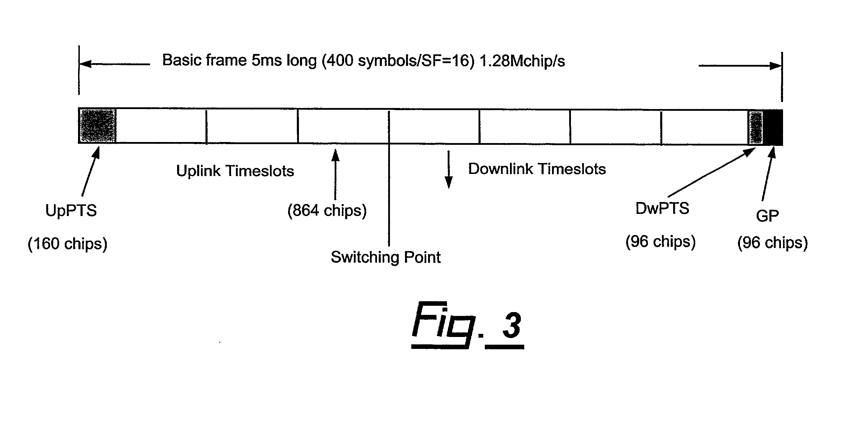

Figure 3 shows the radio frame structure of the third generation cellular system exploiting TD-SCDMA option, which the described invention can be applied to, but is not limited to the same.

As specified above, scope of this invention is to define, in the context of a third generation cellular system exploiting TDD duplexing technique, a signalling method by the network towards the mobile stations with directions for use of the assigned radio resources, when the latter are shared among more users.

The proposed method enables the network to perform a dynamic control of the access to the radio link that, though considering the high number of available radio resources (e.g. 15*16 = 240, for the TDD -UTRA 3.84 Mcps technique), does not require an excessive signalling load; it enables to optimise listening time in the mobile stations (with consequent power saving) and supplies said mobile stations, when enabled to transmit, with indications on the appropriate power level to be used (with consequent power save and reduction of the produced interference).

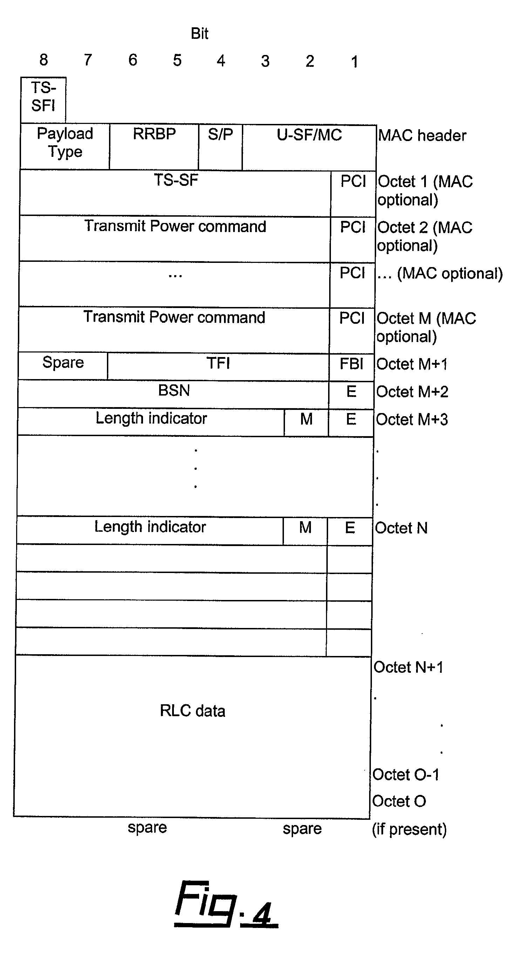

To reach the target goal, the method herein described proposes the following steps:
- A pool of radio resources assigned to a mobile station, and possibly shared with other mobile stations, is assigned an identifier, here described as *User - State Flag* (U-SF), enabling the network to address to that specific resource pool *(uplink* or *downlink*) of that specific mobile station. The more are the resource pools defined for a same mobile user, the higher shall be the granularity with which the network can address to specific radio resources of that user, without growing the requested signalling load. Later in the description, the term "resource pool" shall define one or more radio resources, each one defined by parameters: carrier frequency; time slot; code and transmission frames (this last parameter enables to house more users on the same carrier, time slot and code, alternating them in the time domain).
- All the time slots of the radio frame (e.g. 7, for the TD-SCDMA mode; see figure 3) are assigned a state index, herein described as *Time Slot - State Flag* (TS-SF), enabling the network to indicate to a specific mobile station, for instance addressed through the above-mentioned U-SF field, the availability of the relevant time slot; in particular, said time slot - state flag consists for the TD-SCDMA mode of an octet whose presence is highlighted in fig. 4 through the octet 1 TS-SF. If the addressed mobile station has resources assigned on the time slot "X" and the network enables the use of said time slot setting for instance at logic value 1 the corresponding bit of the TS-SF octet, the mentioned mobile station could respectively transmit, in the agreed time period, on the whole pool of resources, marked with the U-SF state flag, that are located on time slot "x" if said time slot has *uplink* direction, or is certain not to receive, for the agreed time period, from the whole pool resources, marked with the U-SF state flag, located on time slot "x", if said time slot has *downlink* direction. The possibility to explicitly indicate which *uplink* resources are enabled for transmission offers a high flexibility degree on the network side in controlling the access to shared resources, allowing at the same time to solve the non implicit association between *downlink* radio resources and *uplink* radio resources typical of TDD techniques. Notice how, the possibility, on the network side, to inform a mobile station that in the next agreed time period it shall not receive useful information from a given pool of radio resources, enables said mobile station to switch off its own receiver on those radio resources and for the agreed time period with consequent power save or, as an alternative, to carry out measurements of different type, necessary to maintain the quality of the connection underway.
- As an extension of the previous point, it can be assumed that, if the network addresses a specific mobile station only through the U-SF field, the above-mentioned mobile station will interpret this message as enabling it to transmit in the next agreed time period by the whole pool of *uplink* assigned radio resources, marked by the U-SF state flag, and that it shall listen to all the *downlink* assigned radio resources. Dually, the network can address to a specific mobile station only through the TS-SF field when the identifier of the above-mentioned mobile station is implicitly known (for instance because the network sends the message through a radio resource dedicated to the above-mentioned mobile station). The mobile station shall interpret the possibility to use a specific time slot, as a possibility to use all the resources (*uplink* or *downlink*) it has assigned on that time slot.
- Finally, as an integration of the issued described above, the network can signal, for each time slot enabled in transmission, the power level expected in reception by the addressed mobile station. The command concerning the expected power level has been indicated in figure 4 through the octets Octet 1 to Octet M and marking said commands with the "Transmit power command" name. Keeping in mind that the interference level on a time slot can be assumed to be the same for all the codes of that time slot, the addressed mobile station could apply the power indication supplied by the network (opportunely deducted of the relevant *Spreading* factors) to all radio resources it has assigned on that specific time slot.

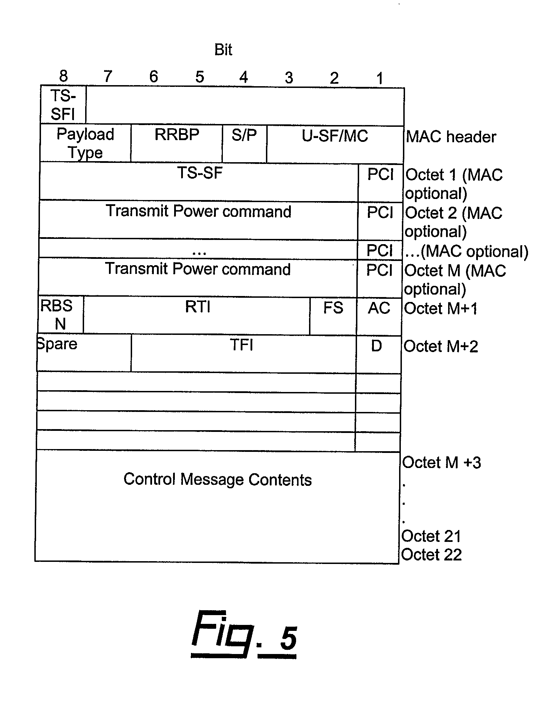

As an example, but not limited to the same, making reference to the TD-SCDMA radio access mode currently standardised in CWTS environment *(Chinese Wireless Telecommunication Standards)* and known as standard TSM (*TD-SCDMA System for Mobile),* figures 4 and 5 show, the structure of the *downlink* data and control block incorporating the teachings of the present invention, that is, containing the *User- State Flag* (U-SF); Time Slot - State Flag (TS-SF) and *Transmit Power Command Level* fields with which the network can signal to the mobile station, the power level expected on uplink time slots enabled for transmission through the TS-SF field.

With reference to figure 4 and 5, it can be noticed how the *Transport Flow Identifier* (TFI) field known to GSM systems is still employed in the same way to indicate the current data or control field to the addressed mobile station.

### Advantages of the Invention

The method scope of the present invention enables a third generation cellular network exploiting a TDD duplexing technique (such as for instance the 1.28 Mcps TDD UTRA mode) to control the use of radio resources shared among more mobile stations for services offered in packet mode, with the complete flexibility of the dynamic allocation medium access mode already known by second generation cellular systems (such as the GSM), but considering the typical issues of third generation cellular networks such as:
- The number of radio resources that can be assigned is high, since it depends on the number of codes that can be allocated per time slot in addition to the number of time slots present in the radio frame; the resource pool concept and the use of the
   *User- State Flag* (U-SF) field, possibly combined with the enabling state of each time slot *Time Slot - State Flag* (TS-SF), enables to limit the size of the signalling message.
- There is no rigid association between *uplink* radio resources and *downlink* radio resources; this makes impossible to indicate/address specific *uplink* radio resources sending massages on specific *downlink* radio resources; the use of the
   TS-SF field enables to control radio resources in a flexible way for each transmission direction.
- The importance to optimise power consumptions in mobile stations; therefore the possibility to signal, through the TS-SF field possibly combined with the U-SF field, the lack of useful information for a mobile user in the agreed next time period, enables the specific mobile station to switch off the receiver or to perform the radio measurements requested by the network in the above-mentioned time period.
- The importance to optimise the transmitted power level, in order to minimise consumptions and the induced interference; this is allowed foreseeing a *Transmit Power Command* field for each time slot enabled in transmission by the network through the TS-SF field.

The following variants to the dynamic access method to shared resources described in its preferred embodiment, enable to further extend the above mentioned advantages:
1^{st} Variant) - A same mobile station is assigned a plurality of control fields U-SF1, ..., U-SFn, each one associated to a different sub-set of resources assigned to the same mobile station. These control fields are "alternatively" introduced by the network in the present downlink packets to discriminate the sub-set of selected resources on which the above-mentioned mobile station shall act in accordance with the information read in the control field TS-SF addressed through the present U-SFi control field.
2^{nd} Variant) - Mobile stations, separate at least for the uplink direction, are assigned the same value of the U-SF control field provided it is associated to different radio resources among the above-mentioned separate mobile stations, said control field can be simultaneously used by the above-mentioned mobile stations to select the (sub-) set of selected resources where to act accordance with the information contained in the TS-SF control field.
3^{rd} Variant) - Said downlink packets include a plurality of control fields U-SF1, ..., U-SFn, each U-SF field being associated to the same mobile station and/or to separate mobile stations and corresponding to a different (sub-) set of resources. The control fields U-SF1, ..., U-SFn being able to be simultaneously used by the above-mentioned mobile stations to select the (sub-)sets of selected resources where to act in accordance with the information contained in the TS-SF control field.

## Claims

1. Dynamic access method to shared resources at the radio interface of a third generation cellular network by more mobile stations (MS) employing said resources to transmit/receive packet data on radio channels to/from a base transceiver station (BTS) in communication with the network, said resources including:
- at least a carrier frequency;
- a first number of time slots of a radio frame for time division utilization, or TDMA, of said carrier for the transmission of packets from the base transceiver station towards the mobile stations;
- a second number of time slots of said radio frame, separate from the first one, for TDMA use, of said carrier for the transmission of packets from the mobile systems to the base transceiver station;
- time slots for uplink or downlink synchronization;
- a radio multiframe including a succession of said radio frames, cyclically numbered, in order that the marking of frame positions in the multiframe can distinguish different radio channels;
- a set of code sequences orthogonal among them, each sequence being able to be temporarily assigned to a mobile station for the so-called spread-spectrum moduiation/demoduiation of packet data transmitted/received on a same codedivision shared time slot, or CDMA, among the mobile stations assignee of the spreading codes;
the set of said resources contributing to define physical channels having different logic meaning concerning a use foreseen for the control of the mobile stations or for the traffic support from/to the mobile stations; the network opportunely employing said control channels for the temporary assignment of the resources necessary to the support of dedicated traffic channels or to the associated signalling; the network being also able to selectively enable the mobile stations to access to a shared channel which they are assignee of, either sending an access enabling information on a same number of dedicated channels, or using control fields mainly included in the header of data and signal packets broadcast transmitted by the BTS on a downlink channel shared by the mobile stations, among which a first control field (TFI) univocally identifies each mobile station which data packet are addressed to, **characterised in that**:
- said resources assigned by the network to a mobile can be parted in single sub-sets, even only one, which can be individually selected for the access to a shared time slot;
- said downlink packets include a second control field (TS-SF) containing as many flags as are the uplink and downlink time slots of the radio frame: an agreed logic value of a flag associated to an uplink time slot enabling the mobile to transmit on that time slot using the pre-selected sub-set of resources for the whole duration of an agreed time period, including one or more radio blocks; while an agreed logic value of a flag relevant to a downlink time slot assuring the mobile to receive nothing, for the agreed time period, from said pre-selected sub-set of resources;
- one, or more, mobile stations having access to a shared time slot are supplied with an additional information (U-SF, dedicated channel) associated to the sub-set, or set, of resources selected for the access, that enables to select the subset, or set, of resources selected by the network and to be used in compliance with the information contained on said flags inside said second control field (TS-SF) joined respectively to uplink timeslot assigned to at least one of the uplink selected resources and at dowlink assigned time slot to at least one of the selected resources.

2. Dynamic access method to shared resources according to claim 1, **characterized in that** said downlink packets include at least a third control field (U-SF) containing said additional information, which can be used by the mobile station to select said sub-set, or set, of pre-selected resources where to act in accordance with the information contained in the second control field (TS-SF).

3. Dynamic access method to shared resources according to claim 2, **characterized in that** a same mobile station is assigned a plurality of said third control fields (U-SF1; ...; U-SFn) each one associated to a different sub-set of resources assigned to the same mobile station mentioned above, said third control fields being alternatively included by the network in said downlink packets to discriminate the pre-selected sub-set of resources where the above-mentioned mobile station shall act in accordance with the information read in said second control field (TS-SF).

4. Dynamic access method to shared resources according to claim 2, **characterized in that** separate mobile stations are assigned the same value of said third control field (U-SF) provided it is associated to different sub-sets of radio resources assigned to the above-mentioned mobile stations, separate at least for the uplink direction, said third control field being able to be simultaneously used by the above-mentioned separate mobile stations to select the relevant sub-set of resources where to act in accordance with information contained in said second control field (TS-SF).

5. Dynamic access method to shared resources according to claim 2, **characterized in that** said downlink packets include a plurality of third control fields (U-SF1; ...; U-SFn) each one corresponding to a different sub-set, or set, of resources associated to the same mobile station and/or to separate mobile stations that can be simultaneously used by the above-mentioned mobile stations to select the sub-sets, or set, of pre-selected resources where to act in accordance with information contained in the second control field (TS-SF).

6. Dynamic access method to shared resources according to claim 1, **characterized in that** said additional information is supplied through a dedicated channel preferably narrow band and can be used by the mobile station to act on radio resources associated to the above-mentioned dedicated channel according to the information contained in the second control field (TS-SF).

7. Dynamic access method to shared resources according to the previous claims, **characterized in that** said downlink packets include at least a fourth control field containing the expected power level in reception in the base transceiver station by the mobile stations addressed through the third control field (U-SF, dedicated channel) concerning at least one of the time slots enabled to transmission by the second control field (TS-SF).
